(19)

Europäisches Patentamt

European Patent Office

Office européen des brevets

(11) **EP 4 475 529 A1**

(12) **EUROPEAN PATENT APPLICATION**

(43) Date of publication:
**11.12.2024 Bulletin 2024/50**

(21) Application number: **23305907.0**

(22) Date of filing: **07.06.2023**

(51) International Patent Classification (IPC):
*H04N 19/70* (2014.01)   *H04N 19/117* (2014.01)
*H04N 19/176* (2014.01)   *H04N 19/82* (2014.01)

(52) Cooperative Patent Classification (CPC):
**H04N 19/70; H04N 19/117; H04N 19/176;**
**H04N 19/82;** H04N 19/96

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Beijing Xiaomi Mobile Software Co.,**
**Ltd.**
**Beijing 100085 (CN)**

(72) Inventor: **BLESTEL, Médéric**
**35170 BRUZ (FR)**

(74) Representative: **RVDB Rennes**
**44 rue Lariboisière**
**35235 Thorigné-Fouillard (FR)**

(54)   **VIDEO PROCESSING METHOD**

(57)   The present disclosure relates to signaling in a bitstream coded block data and in-loop filtering parameters of a video sequence comprising video pictures, each video picture being split into multiple coding tree units, denoted CTU, each CTU comprising CTU blocks, CTU coded blocks data being obtained for each CTU by encoding blocks of said CTU, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein CTU coded blocks data associated with a CTU and CTU in-loop filtering parameters associated with said CTU are signaled in distinct Network Abstract Layer units, called NAL units.

Fig. 17

EP 4 475 529 A1

## Description

FIELD

The present disclosure generally relates to video sequence encoding and decoding. Particularly, but not exclusively, the technical field of the present disclosure is related to signaling coded blocks data and parameters used for coding/decoding/reconstructing/filtering a video sequence.

BACKGROUND

In-Loop filtering aims at improving the picture quality by removing compression artifacts (like blocking discontinuities, and quantization noise). In VVC (Rec. ITU-T H.266 | ISO/IEC 23090-3, "Versatile Video Coding", 2020), various loop filters exist like luma mapping with chroma scaling (LMCS), deblocking filter (DBF), sample adaptive offset (SAO), adaptive loop filter (ALF), and cross-component adaptive loop filter (CC-ALF).

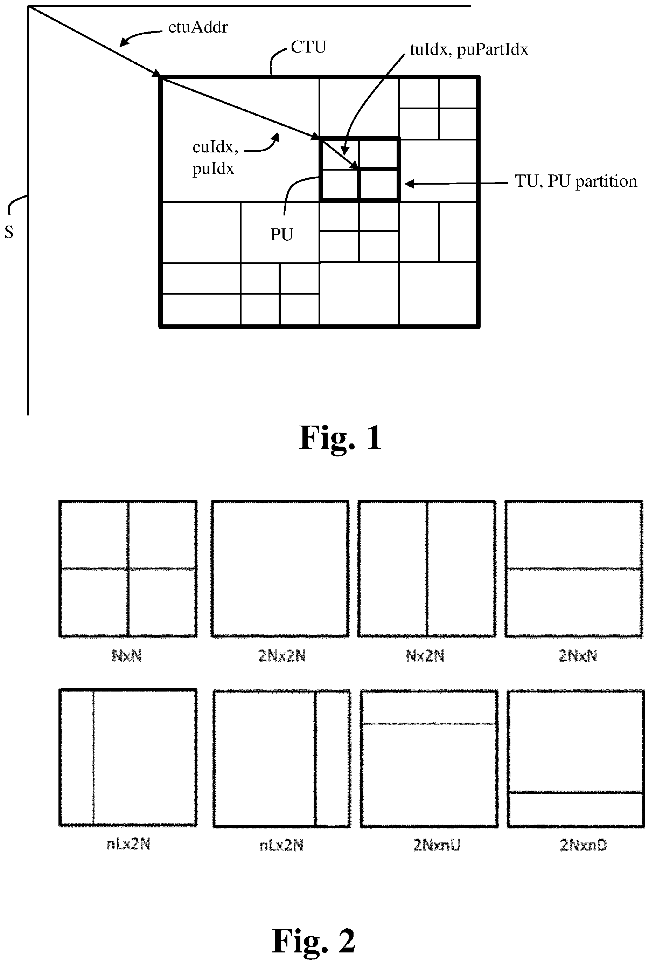

These filters are qualified as "in-loop" filters as they are applied inside the encoding and the decoding loop, i.e., before storing the pictures in the decoded picture buffer (cf. Figure 1).

If used during the encoding step, these filters shall be applied at the decoding step to ensure the good decoding process, i.e., which reconstructs the pictures the same way as on the encoder side.

In a video bitstream, the determination of parameters upon which the in-loop filter relies is related to other video processing procedures. As a result, the in-loop filtering operation is delayed, leading to a deterioration in the performance of video encoding or decoding.

At least one exemplary embodiment of the present disclosure has been devised with the foregoing in mind.

SUMMARY

The following section presents a simplified summary of the at least one exemplary embodiment in order to provide a basic understanding of some aspects of the present disclosure. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present disclosure, there is provided a method of encoding video pictures to bitstream wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; and wherein the method comprises signaling, in the bitstream, CTU coded blocks data of a CTU and CTU in-loop filtering parameters of said CTU in distinct Network Abstract Layer units, called NAL units.

According to a second aspect if the present disclosure, there is provided a method of decoding video pictures from bitstream wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; wherein the method comprises parsing, from the bitstream, CTU coded blocks data of a CTU and CTU in-loop filtering parameters of said CTU from distinct Network Abstract Layer units, called NAL units.

In one exemplary embodiment, the CTU in-loop filtering parameters of a CTU are embedded in a unit of said NAL units, called first NAL unit, that is only dedicated to in-loop filtering parameters signaling.

In one exemplary embodiment, a first NAL unit embedding in-loop filtering parameters intended to be used to apply in-loop filtering on coded blocks data and another NAL unit embedding said coded block data are in a same picture unit.

In one exemplary embodiment, wherein when a NAL unit reordering is active, a picture unit containing at least one coded slice NAL unit embedding coded block data of a coded picture and at least one corresponding first NAL unit embedding in-loop filtering parameters intended to be apply on said coded block data, all coded slice NAL units of the picture unit are followed by all the first NAL units of the picture unit.

In one exemplary embodiment, when a NAL unit reordering is active, a picture unit containing at least one coded slice NAL unit embedding coded block data of a coded picture and at least one corresponding first NAL unit embedding in-loop filtering parameters intended to be apply on said coded block data, all the first NAL units of the picture unit are followed by all the coded slice NAL units of the picture unit.

In one exemplary embodiment, wherein when a NAL unit reordering is active, a picture unit containing at least one coded slice NAL unit embedding coded block data of a coded picture and at least one corresponding first NAL unit embedding in-loop filtering parameters intended to be apply on said coded block data, coded slice NAL units of the picture unit embedding coded block data and corresponding first NAL units of the picture unit embedding in-loop filtering parameters intended to be apply on said coded block data are interleaved.

In one exemplary embodiment, wherein at least one syntax element is signaled in the bitstream or parsed from the bitstream to indicate if NAL unit reordering is active or not.

In one exemplary embodiment, said at least one syntax element is signaled in the bitstream or parsed from the bitstream at the sequence and/or picture and/or picture header and/or slice header level.

In one exemplary embodiment, a first NAL unit is dedicated to a specific in-loop filtering.

According to a third aspect of the present disclosure, there is provided a video pictures encoder wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; and wherein the encoder comprises means for signaling in a bitstream CTU coded blocks data of a CTU and CTU in-loop filtering parameters of said CTU in distinct Network Abstract Layer units, called NAL units.

According to a fourth aspect of the present disclosure, there is provided a video pictures decoder wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; and wherein the method comprises parsing from a bitstream CTU coded blocks data of a CTU and CTU in-loop filtering parameters of said CTU from distinct Network Abstract Layer units, called NAL units.

According to a fifth aspect of the present disclosure, there is provided a bitstream, formatted to include CTU coded blocks data and CTU in-loop filtering parameters according to a method according to the first aspect.

According to a sixth aspect of the present disclosure, there is provided a system comprising means for performing one of the methods according to either the first or second aspect of the present disclosure.

According to a seventh aspect of the present disclosure, there is provided a computer program product including instructions which, when the program is executed by one or more processors, causes the one or more processors to carry out a method of the methods according to either the first or second aspect of the present disclosure.

According to a eighth aspect of the present disclosure, there is provided a non-transitory storage medium carrying instructions of program code for executing a method of the methods according to either the first or second aspect of the present disclosure.

The specific nature of at least one of the exemplary embodiments as well as other objects, advantages, features, and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present disclosure, and in which:

Figure 1 shows an example of coding-tree unit in accordance with HEVC;

Figure 2 shows an example of partitioning coding units into prediction units in accordance with HEVC;

Figure 3 shows an example of a CTU division in accordance with WC;

Figure 4 shows examples of split modes supported in the multi-type tree partitioning in accordance with WC;

Figure 5 shows a schematic block diagram of steps of a method 100 of encoding a video picture VP of a video sequence in accordance with prior art;

Figure 6 shows a schematic block diagram of steps of a method 200 of decoding a video picture VP of a video sequence in accordance with prior art;

Figure 7 shows a schematic block diagram illustrating the order of steps for producing, at the encoding side, CTU coded blocks data relative to a CTU of a video picture and CTU in-loop filtering parameters used for performing in-loop filtering on reconstructed blocks of said CTU in accordance with prior art;

Figure 8 shows a schematic block diagram illustrating the order of steps for producing, at the decoding side, CTU coded blocks data relative to a CTU of a video picture and CTU in-loop filtering parameters used for performing in-loop filtering on reconstructed blocks of said CTU in accordance with prior art;

Figure 9 shows an example structure of a CVS in accordance with prior art;

Figure 10 shows an example of a Picture Unit structure in accordance with prior art;

Figure 11 shows a VVC NAL unit type table modified to include a specific type of NAL unit in accordance with an exemplary embodiment of the present disclosure;

Figure 12 shows the modified CTU syntax in accordance with an exemplary embodiment of the present disclosure;

Figure 13 shows a **loop_filter_rbsp()** function in accordance with an exemplary embodiment of the present disclosure;

Figure 14 shows syntax elements of the

Loop_filter_header() function in accordance with an exemplary embodiment of the present disclosure;

Figure 15 shows the Loop_filter_data() function that signals the loop filter syntax for a given slice/tile in accordance with an exemplary embodiment of the present disclosure;

Figure 16 shows the Loop_filter_ctu_unit() in accordance with an exemplary embodiment of the present disclosure;

Figure 17 shows a NAL unit reordering in a picture unit in accordance with an exemplary embodiment of the present disclosure;

Figure 18 shows a NAL unit reordering in a picture unit in accordance with an exemplary embodiment of the present disclosure;

Figure 19 shows a NAL unit reordering in a picture unit in accordance with an exemplary embodiment of the present disclosure;

Figure 20 shows signaled syntax elements to indicate if NAL unit reordering is active or not in accordance with an exemplary embodiment of the present disclosure;

Figure 21 shows the Loop filter header() function in accordance with an exemplary embodiment of the present disclosure;

Figure 22 shows mono-slice PU in accordance with exemplary embodiments of the present disclosure;

Figure 23 illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present disclosure is intended to cover all modifications, equivalents, and alternatives falling within the spirit and scope of the present disclosure.

At least one of the aspects generally relates to video picture encoding comprising a signaling step and video picture decoding comprising a parsing step.

One other aspect generally relates to transmitting a bitstream comprising the signaling step and one other aspect relates to receiving/accessing a bitstream that comprises the parsing step.

One other aspect relates to video picture processing that includes the encoding step and the signaling step or the video picture decoding step and the parsing step.

At least one of the exemplary embodiments is described for encoding/decoding/processing a video picture but extends to the encoding/decoding/processing of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/recrT-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en), VVC (ISO/IEC 23090-3 Versatile Video Coding, ITU-T Recommendation H.266, https://www.itu.int/rec/T-REC-H.266-202008-I/en) but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present disclosure may be used individually or in combination.

A video sequence comprises consecutive video pictures having temporal relationships between them.

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprises in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format. A luma sample is a luma value and a chroma sample is a chroma or a colour value.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample, in short a luma block, or a block of at least one chroma sample, in short a chroma block, may be considered when the picture/video format is the well-known (Y,Cb,Cr) format, or a block of at least one color sample when the picture/video format is the well-known (R, G, B) format.

The at least one exemplary embodiment is not limited to a particular picture/video format.

In the state-of-the-art video compression systems such as HEVC (ISO/IEC 23008-2 High Efficiency Video Coding, ITU-T Recommendation H.265, https://www.itu.int/recrT-REC-H.265-202108-P/en) or VVC, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left boundaries spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in a Sequence Parameter Set (SPS).

The spatial position of a CTU in a CTU grid is determined from a CTU address **ctuAddr** defining a spatial position of the top-left corner of a CTU from an origin. As illustrated on **Figure 1**, the CTU address may define the spatial position from the top-left corner of a higher-level spatial structure S containing the CTU.

A coding tree is associated with each CTU to determine a tree-division of the CTU.

As illustrated on **Figure 1**, in HEVC, the coding tree is a quad-tree division of a CTU, where each leaf is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartldx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuldx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated in **Figure 2**. They include square partitions (2Nx2N and NxN), which are the only ones used in both Intra and Inter prediction CUs, symmetric non-square partitions (2NxN, Nx2N, used only in Inter prediction CUs), and asymmetric Partitions (used only in Inter prediction CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

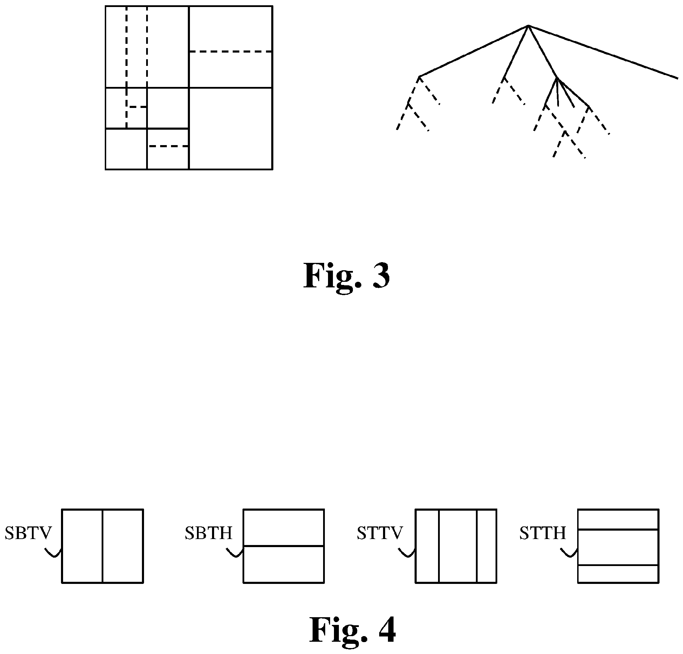

As illustrated on **Figure 3**, in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4**. These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

In intra predicted picture, separated coding trees may be used, for luma component on one side and chroma components on the other side. The luma component part of a CTU is called a luma coding tree block. A luma coding tree block (luma CTB) is then associated to a coding tree, which leaves are associated to luma coding blocks. Furthermore, in the case of separated luma/chroma coding trees and a 3 components picture, the two chroma CTB share the same coding tree.

Contrary to HEVC, in VVC, in most cases, CU, PU and TU have equal size, which means coding units are generally not partitioned into PU or TU, except in some specific coding modes.

In VVC, a high-level picture partitioning is also provided in which, basically, a video picture may be partitioned into sub-pictures, slices, and tiles.

A tile is a sequence of CTUs that covers a rectangular picture area of a video picture. The CTUs in a tile are usually scanned in raster scan order within that tile. The tile size (width and height) is an integer multiple of the default CTU size (default CTU width and default CTU height).

A slice comprises an integer number of tiles or an integer number of consecutive complete CTU rows within a tile. Consequently, each vertical slice boundary is always also a vertical tile boundary. It is possible that a horizontal boundary of a slice is not a tile boundary but consists of horizontal CTU boundaries within a tile; this occurs when a tile is split into multiple rectangular slices, each of which consists of an integer number of consecutive complete CTU rows within the tile. The slice size (width and height) is an integer multiple of the default CTU size (default CTU width and default CTU height).

Two modes of slices are supported, namely the raster-scan slice mode and the rectangular slice mode. In the raster-scan slice mode, a slice contains a sequence of complete tiles in a tile raster scan order of a video picture. In the rectangular slice mode, a slice contains either a number of complete tiles that collectively form a rectangular picture area or several consecutive complete CTU rows of one tile that collectively form a rectangular picture area. Tiles within a rectangular slice are scanned in tile raster scan order within the rectangular picture area corresponding to that slice.

A sub-picture contains one or more slices that collectively cover a rectangular picture area. Consequently, each sub-picture boundary is also always a slice boundary, and each vertical sub-picture boundary is always also a vertical tile boundary. The sub-picture size (width and height) is an integer multiple of the default CTU size (default CTU width and default CTU height).

One or both of the following conditions shall be fulfilled for each sub-picture and tile:

- All CTUs in a sub-picture belong to the same tile.

- All CTUs in a tile belong to the same sub-picture.

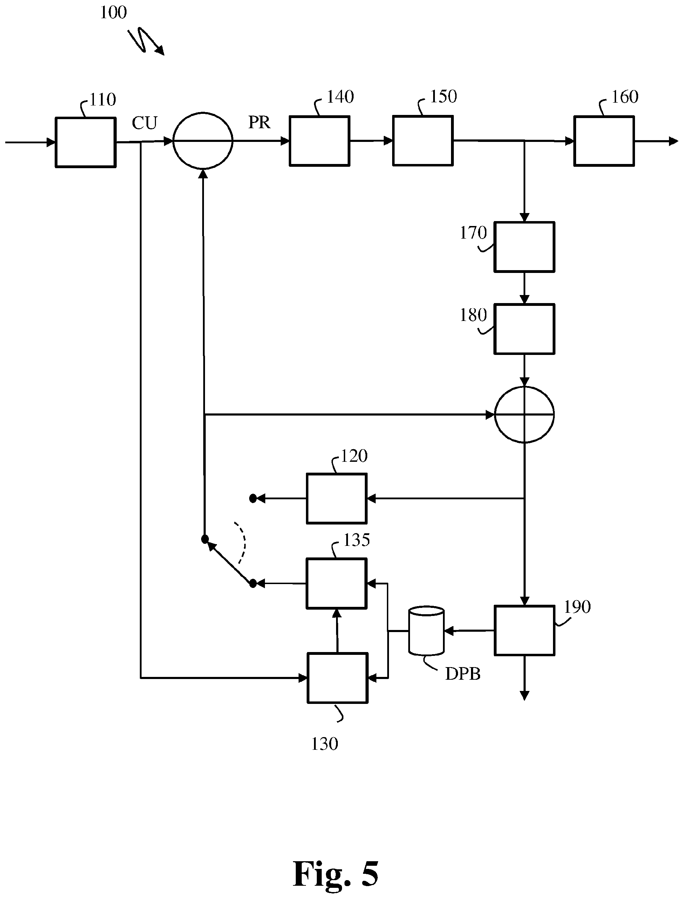

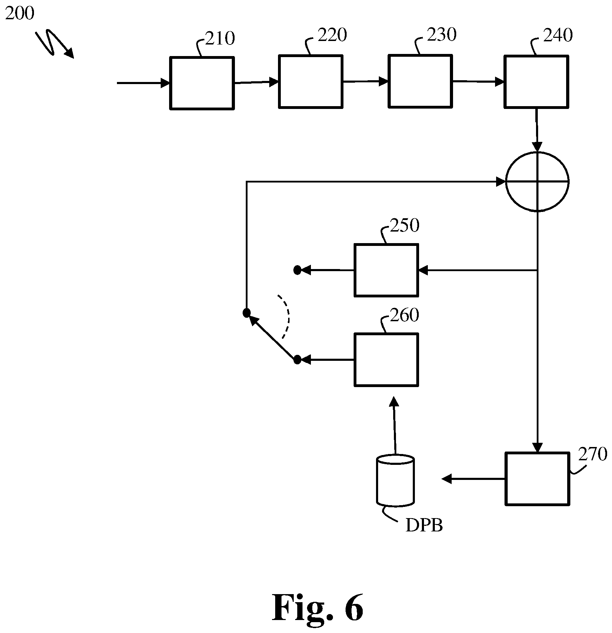

**Figures 5** and **6** provide an overview of video encoding/decoding methods used in current video standard compression systems like HEVC or VVC for example.

**Figure 5** shows a schematic block diagram of steps of a method 100 of encoding a video picture VP of a video sequence in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a video picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-prediction block based on already encoded, decoded, and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference picture(s) used to predictively encode the current video picture, a reference block that is a good predictor of the current block. In uni-directional motion estimation/compensation, a candidate reference block belongs to a single reference picture of a reference picture list denoted L0 or L1, and in bidirectional motion estimation/compensation, the candidate reference block is derived from a reference block of the reference picture list L0 and a reference block of the reference picture list L1.

For instance, a good predictor of the current block is a candidate reference block which is similar to the current block. It may also correspond to a reference block that provides a good trade-off between its similarity to current block, and the rate cost of motion information needed to indicate its use for the temporal prediction of current block.

The output of the motion estimation step 130 is inter-prediction data comprising motion information associated to the current block and other information used for obtaining a same prediction block at the encoding/decoding side. Typically motion information comprises one motion vector and a reference picture index for uni-directional estimation/compensation and two motion vectors and two reference picture indices for bi-direction estimation/compensation). Next, motion compensation (step 135) obtains a prediction block by means of the motion vector(s) and reference picture index (indices) determined by the motion estimation step 130. Basically, the reference block belonging to a selected reference picture and pointed to by a motion vector may be used as the prediction block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the prediction block.

Prediction information data is signaled into the bitstream. The prediction information may comprise prediction mode (intra or inter or skip), intra/inter prediction data and any other information used for obtaining a same prediction block at the decoding side.

The method 100 selects one prediction mode (the intra or inter prediction mode) by optimizing a rate-distortion trade-off taking into account the encoding of a prediction residual block calculated, for example, by subtracting a candidate prediction block from the current block, and the signaling of prediction information data required for determining said candidate prediction block at the decoding side.

Usually, the best prediction mode is given as being the prediction mode of a best coding mode p* for a current block given by:

$$p^* = \underset{p \in P}{\mathrm{Argmin}}\{RD_{cost}(p)\}$$

where $P$ is the set of all candidate coding modes for the current block, $p$ represents a candidate coding mode in that set, $RD_{cost}(p)$ is a rate-distortion cost of candidate coding mode $p$, typically expressed as:

$$RD_{cost(p)} = D(p) + \lambda.R(p)$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best prediction block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170), and inverse transformed (180) (or not) as part of the encoding loop, leading to a decoded prediction residual block. The decoded prediction residual block and the prediction block are then combined, typically summed, which provides the reconstructed block.

CTU coded blocks data represents all coding tree (CT) data and parameters used to encode/decode/reconstruct blocks of all CTUs of a video picture of a video sequence. CTU coded blocks data is signaled in a bitstream according to a coding tree syntax, i.e., a set of syntax elements carrying CTU coded blocks data. CTU coded blocks data comprises parameters for defining a coding tree (partitioning information data), entropy coding quantized transform coefficient blocks (or quantized prediction residual blocks) comprised in a CTU, prediction information data relative to blocks of the CTU and other information data used for encoding/decoding/reconstructing samples of blocks of the CTU.

The reconstructed blocks or the filtered reconstructed blocks of all CTUs of a video picture form a reference picture that may be stored into a decoded picture buffer (DPB) so that it can be used as a reference picture for the encoding of a next current block of a CTU of the video picture VP, or of a next video picture to encode.

In step 190, in-loop filters may be applied to a reconstructed picture, i.e., a video picture comprising reconstructed blocks of each CTU of the video picture.

These in-loop filters are applied inside the encoding and the decoding loop, i.e., before storing the filtered reconstructed video pictures as reference pictures in DPB. In-loop filters may be parametrized from CTU in-loop filtering parameters to indicate that in-loop filters are parametrized at the CTU level. If used during the encoding, these filters shall be applied at the decoding to ensure the good decoding process, i.e., which reconstructs the video pictures the same way as on the encoder side.

LMCS does not specifically address the coding artifacts reduction but aims at better using the signal range for improved coding efficiency by applying two strategies:

- Reallocating the luma code values of the input video signal from the original sample domain to a mapped sample domain. For instance, the signal of a video clip that may use only a narrow range of luma code will be mapped to a proper sample domain to improve the whole compression process.

- The chroma residue scaling is designed to compensate for the luma mapping on the bit cost repartition between the luma and chroma signal.

LMCS parameters are carried in a dedicated Adaptation Parameter Set (LMCS APSs).

Hence, when multiple slices in the same or different video pictures use the same LMCS parameters, the redundant transmission of LMCS parameters can be avoided. When LMCS is applied to a video picture or a slice, only indices of the referenced LMCS APSs are signaled in the picture or slice header.

LMCS data contains two different parts:

- the syntax related to a piecewise linear model of up to 16 pieces to map luma code to a more appropriate sample domain and inversely.

- a Chroma Scaling offset value.

The flexible adjustment between luma and chroma signal can be achieved by enabling or disabling chroma scaling at the sequence or picture level or further adjusting chroma scaling by applying a chroma scaling offset (LMCS on/off flag).

LMCS on/off flag and LMCS data are CTU in-loop filtering parameters that are signaled in a bitstream before signaling CTU coded blocks data. LMCS on/off flags may be signaled at the CTU level to enable or disable this filter, or to signal the LMCS data.

In the VVC standard, DBF is applied after the LMCS. It aims at reducing the discontinuities that can appear at the transform and block boundaries, referred to blocking artifacts. When applied, it will smooth transition across the block boundaries while avoiding removal of natural edges.

The VVC deblocking filter, based on the HEVC design, has been enhanced to support larger block sizes, to reduce specific visible artifacts, and also benefits from more flexibility and supports a new control mode based on average local luma samples level.

Contrary to other filters, DBF does not need signaling at the CTU level. All DBF parameters (filter length and strength) are derived from CU mode, quantization parameter, motion vectors difference, and spatial activity.

In VVC, the chroma and luma deblocking can be performed independently on block units of $8 \times 8$ and $16 \times 16$ samples, respectively. Consequently, SAO aims at reducing artifacts resulting from the transform coefficients quantization which can arise inside the blocks. It will attenuate the ringing artifacts and correct the local average intensity changes.

VVC SAO is similar to HEVC and consists in reducing sample distortion by first classifying reconstructed samples into different categories. For each category, an offset is computed and then added to each sample of the category. Each offset is properly calculated at the encoder and explicitly signaled to the decoder for reducing sample distortion. However, the classification of each sample is performed at both the encoder and the decoder for saving side information significantly. To achieve low latency of only one CTU, a CTU-based syntax design is specified to adapt SAO parameters for each CTU. SAO can be also controlled at the sequence and picture levels.

First, SAO on/off flags are signaled in the bitstream at sequence, slice, and CTU levels. Second, at the CTU level, SAO parameters (band or edge offset, and class) are signaled if SAO is enabled at that level.

SAO on/off flags and SAO parameters are CTU in-loop filtering parameters that are signaled in a bitstream before signaling CTU coded blocks data.

In VVC, ALF and CC-ALF perform a final corrective step that typically targets improving the signal fidelity and thus are placed at the last in-loop filtering step 190. It applies to reduce the mean square error (MSE) between the original and the reconstructed samples using Wiener-based filtering.

For each non-overlapping 4x4 block, ALF applies a sample gradients-based classification and filters the block according to the classification.

CC-ALF exploits the correlation between the luma and chroma samples and applies only to the chroma samples. CC-ALF generates a correction of chroma samples using a linearly filtered version of the luma samples located around the same relative location as the chroma samples.

In addition to the luma $4 \times 4$ block-level filter adaptation, ALF supports CTB-level filter adaptation. A luma CTB can use a filter set calculated for the current slice or one of the filter sets calculated for already coded slices.

First, ALF on/off flags are signaled at sequence, picture, slice, and CTU levels. Second, ALF parameters (filter usage information and an index indicating which ALF filter is used) are signaled in the bitstream: the filter usage information is signaled at picture, slice, and CTU level, if ALF is enabled at that level and the index is signaled in the bitstream at the CTU level.

ALF parameters may be carried in a coded syntax container called Adaptation Parameter Set (APS). APS aims at conveying slice-level information that may be shared by multiple slices (attached either to one or several video pictures). An APS may contain some ALF parameters, which, in that case, are taken into account by the decoding to perform Adaptive Loop Filtering operation. The Adaptation Parameter Set (APS) concept is useful to avoid redundancy between coded slices.

ALF on/off flags and ALF parameters are CTU in-loop filtering parameters that are signaled in the bitstream before signaling CTU coded blocks data.

**Figure 6** shows a schematic block diagram of steps of a method 200 of decoding a video picture VP of a video sequence in accordance with prior art.

In step 210, CTU coded blocks data and CTU in-loop filtering parameters are obtained by parsing and entropy decoding a bitstream of encoded video picture data. For instance, this bitstream has been generated in accordance with method 100.

Other information data may also be parsed, and entropy decoded for decoding from the bitstream a current block of the video picture VP.

In step 220, a reconstructed picture is divided into current blocks based on partitioning information data (CTU coded blocks data). Each current block is entropy decoded from the bitstream along a decoding loop also called "in loop". Each decoded current block is either a quantized transform coefficient block or quantized prediction residual block (CTU coded blocks data).

In step 230, the current block is de-quantized and possibly inverse transformed (step 240), to obtain a decoded prediction residual block.

On the other hand, the prediction information data (CTU coded blocks data) is used to predict the current block. A prediction block is obtained through its intra prediction (step 250) or its motion-compensated temporal prediction (step 260). The prediction process performed at the decoding side is identical to that of the encoding side.

Next, the decoded prediction residual block and the prediction block are then combined, typically summed, which provides a reconstructed block.

In step 270, in-loop filters using CTU in-loop filtering parameters apply to a reconstructed picture (comprising reconstructed blocks) and the filtered reconstructed blocks form a reference picture that may be stored into a decoded picture buffer (DPB) as above discussed (**Figure 5**).

In VVC, motion information is stored per 4x4 blocks in each video picture. This means once a reference picture is stored in the decoded picture buffer (DPB, **Figure 5** or **6**), motion vectors and reference pictures indices used for the temporal prediction of video picture blocks are stored on a 4x4 block basis. They can serve as temporal prediction of motion information for encoding/decoding a subsequent inter-prediction video picture.

Either in HEVC, VVC or future standards, or in the Enhanced Compression Model (ECM, M. Coban, F. Le L6annec, K. Naser, J. Ström, L. Zhang, "Algorithm description of Enhanced Compression Model 6 (ECM 6)", JVET-AA2025, October 2022.), the CTU in-loop filtering parameters are signaled in the bitstream before the CTU coded blocks data, while the in-loop filtering is applied after the CTU reconstruction.

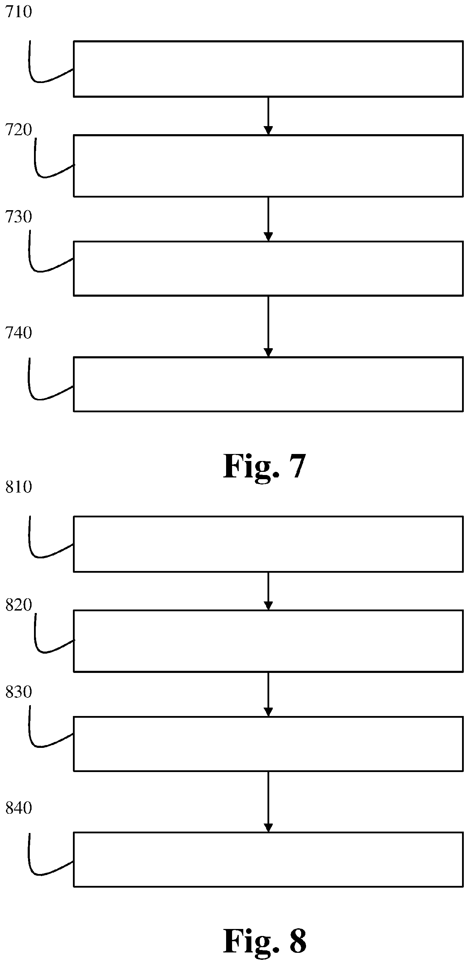

**Figure 7** shows a schematic block diagram illustrating the order of steps for encoding in a bitstream CTU coded blocks data relative to a CTU of a video picture and CTU in-loop filtering parameters used for performing in-loop filtering on reconstructed blocks of said CTU in accordance with prior art.

First, in step 710, CTU blocks coded data is obtained by encoding blocks of the CTU, denoted CTU blocks, according to the method of **Figure 5**. CTU blocks are then reconstructed. Next, in step 720, the reconstructed CTU blocks are filtered (in-loop filtering) using the CTU in-loop filtering parameters associated with the CTU. Next, in step 730, the CTU in-loop filtering parameters are entropy encoded and signaled in a bitstream. Then, in step 740, CTU coded blocks data is entropy encoded and signaled in the bitstream. CTU in-loop filtering parameters are thus signaled in a bitstream before the CTU coded blocks data.

**Figure 8** shows a schematic block diagram illustrating the order of steps for decoding from a bitstream CTU coded blocks data used for decoding CTU blocks of a video picture and CTU in-loop filtering parameters used for performing in-loop filtering on reconstructed blocks of said CTU in accordance with prior art.

First, in step 810, CTU in-loop filtering parameters are obtained by parsing a bitstream and by applying entropy decoding. Then, in step 820, CTU coded blocks data is obtained by parsing the bitstream and by applying entropy decoding. The method of **Figure 6** decodes the CTU blocks by using the CTU coded blocks data and obtains, in step 830, reconstructed CTU blocks. Then, in step 840, the reconstructed CTU blocks are filtered (in-loop filtering) using the CTU in-loop filtering parameters.

In the above discussed video standards, there are dependencies in the CTU decoding (resp. encoding) process. First, CTU blocks reconstruction can start when the entropy decoding of the CTU coded blocks data is finished. Also, the CTU in-loop filtering can start only when the CTU blocks reconstruction process is finished. Generally, there is a lag of at least one CTU between the CTU in-loop filtering and the CTU block reconstruction as in-loop filters can be applied on CTU borders. Finally, the entropy decoding is sequential, so the decoding of the CTU coding parameters can start only when the entropy decoding of the CTU in-loop filters parameters is finished. CTU coded blocks data and CTU in-loop filtering parameters are independent, but the entropy decoding (resp. encoding) creates a dependency between both.

In the video coding standardization community, and specifically in the Joint Video Experts Team (JVET) of the ITU-T and ISO/IEC that developed the VVC standard, the encoding/decoding system interface is modeled as a network abstraction layer (NAL), and the data structures carried by this interface are known as NAL units. A coded video bitstream consists of a series of NAL units. The NAL units that represent the values of color component samples are called the Video Coding Layer (VCL) NAL units or coded slice NAL units. The compressed data within the VCL NAL units is called the slice data, and the slice data in each slice consists of a series of coded CTUs that are sent according to a particular scanning order.

Non-VCL NAL units are also defined. Non-VCL NAL units contain any associated additional information such as parameter sets (important header data that can apply to a large number of VCL NAL units) and supplemental enhancement information (timing information and other supplemental data that may enhance usability of the decoded video signal but are not necessary for decoding the values of the samples in the video pictures).

The structuring of the bitstream into NAL units and all of the syntax outside the slice data, including the headers that precede the slice data within the VCL NAL units and all of the syntax in the non-VCL NAL units, is considered the high-level syntax (HLS).

HLS topics thus include the basic structure of the bitstream and coded data structures, sequence and picture level parameters signaling, syntax for random access and stream adaptation, decoded picture management (including reference picture management), profile and level signaling, the bitstream buffering data flow model, high-level picture partitioning (slicing, tiling, etc.), temporal scalability, extensibility and backward compatibility, data loss resilience, signaling of supplemental information, etc.

For VVC, the HLS specifically includes the NAL unit syntax (including the NAL unit header), decoding capability information (DCI), operating point information (OPI), video parameter set (VPS), sequence parameter set (SPS), picture parameter set (PPS), adaptation parameter set (APS), video usability information (VUI), supplemental enhancement information (SEI), access unit delimiter (AUD), picture header (PH), slice header (SH), end of sequence (EOS), end of bitstream (EOB), etc. CTU-level and lower-level coding tool syntax are not considered HLS.

As in AVC and HEVC, a bitstream in VVC consists of one or more coded video sequences (CVSs). A CVS is independently coded from other CVSs. Each CVS consists of one or more layers, each of which is a representation of the video with a specific quality or spatial resolution, or a representation of some component interpretation property, e.g., as depth or transparency maps or perspective views. In another dimension, each CVS consists of one or more access units (AUs), and each AU consists of one or more picture units (PUs) of different layers.

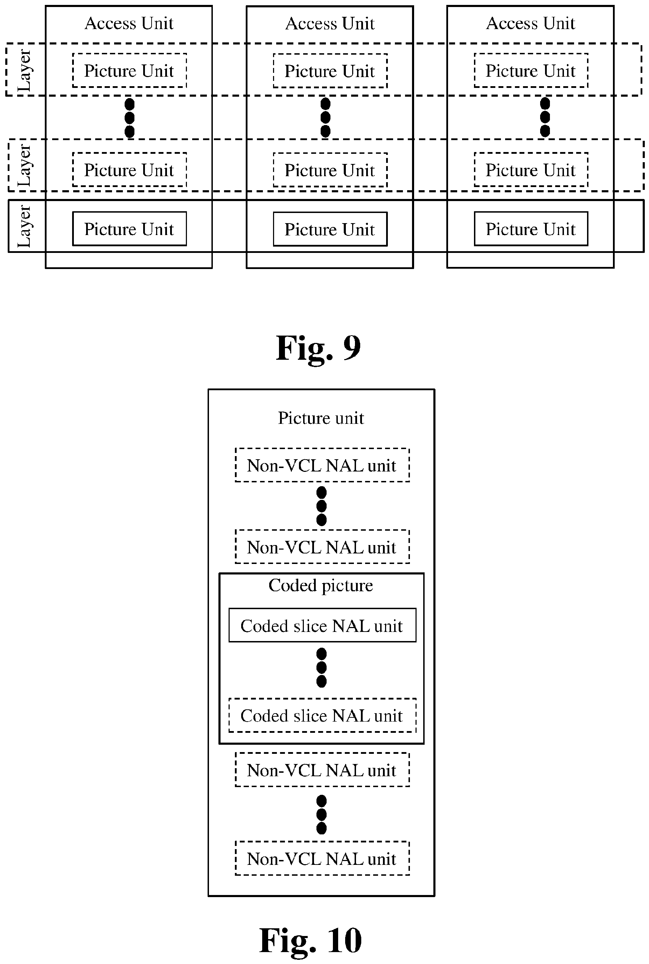

**Figure 9** shows an example structure of a CVS in accordance with prior art. A Coded Layer Video Sequence (CLVS) is a layer-wise CVS that consists of a sequence of Picture Units (PUs) in the same layer. If a bitstream has multiple layers, a CVS in the bitstream has one or more CLVSs for each layer. Otherwise, a CVS is identical to a CLVS. In **Figure 9**, an Access Unit (AU) is represented by a vertical group of PUs belonging to the same time instant, while a CLVS is represented by a horizontal group of PUs belonging to the same layer that spans across several AUs. Each PU contains one coded picture, and each coded picture comprises one or more coded slice NAL units, which are also referred to as VCL NAL units. In addition to coded slice NAL units, a PU may contain non-VCL NAL units, such as parameter sets and Supplementary Enhancement Information (SEI) NAL units. A simplified structure of a Picture Unit is shown in **Figure 10.**

The Slice Header (SH) conveys information for a particular slice, which is the set of the CTUs in a picture that is conveyed in a particular scanning order within a single VCL NAL unit. The SH in VVC was designed aiming to convey information that applies only to the slice and may be different for other slices of the same picture. Information that applies to all slices of a picture is conveyed in another header called the Picture Header (PH).

The use of a Picture Header is a rather simple concept that was used in older standards such as MPEG-2 but was not used in AVC and HEVC since the PPS and SH were sufficient to convey the picture-level information in those standards. In VVC, a PH structure is present for each PU (Picture Unit). A PH is present either in a separate PH NAL unit or as syntax included in the slice header (SH). The PH can only be included in the SH if the entire PU contains only one slice. To simplify the design, within a CLVS, PHs can only be either all in PH NAL units or all in SHs. When the PHs are in the SHs, there is no PH NAL unit in the CLVS.

The PH is designed for two objectives. The first is to help reduce the signaling overhead of SHs for pictures containing multiple slices per picture, by carrying syntax elements that have the same value for all slices of a picture, thus avoiding the repetition of these syntax elements in each SH and avoiding moving syntax into the PPS that might change frequently from picture to picture. These include IRAP/GDR picture indications, inter and intra slice type allowance flags, and information related to picture order count (POC), RPLs, deblocking filter, sample adaptive offset (SAO), ALF, LMCS, quantization scaling lists, quantization parameter (QP) delta, weighted prediction, coding block partitioning, virtual boundaries, identification of a picture for collocated picture prediction properties, etc. The second purpose is to help the decoder to identify the first slice of each coded picture that contains multiple slices. Since one and only one PH is present for each PU, when the decoder receives a PH NAL unit, it easily knows that the next VCL NAL unit is the first slice of a picture.

In VVC, the in-loop filter parameters consist of two kinds of parameters, labelled loop filter structure. First, high-Level parameters are signaled at the SH, or the PH. These parameters configure the in-loop filters and are valid for at least one current slice (could be valid for several slices when signaled in a PH). These parameters include signaling like which parameter identifier to use, disable or enable a component filtering. etc.

Then, for each CTU, dedicated in-loop filter parameters are signaled if necessary.

One of the problems solved by the present disclosure is to increase the encoding and decoding runtime performance of existing video coding standards without sacrificing the coding performances by enabling both a video coder and a video decoder to implement multiple parallel processing mechanisms, providing a higher degree of reachable parallelism than in prior art.

In the present disclosure, the bitstream syntaxes that are shown in figures for illustrative purposes, are using the VVC syntax elements, illustrating as if the disclosure was implemented in VVC. These examples describe the methodology to encode or decode parts of a bitstream, reporting the syntax elements' order and signaling methodology. The present disclosure is not limited to any standard and may be implemented with syntax elements of other standards. The reader can refer to VVC for full details of each instruction.

Generally speaking, the present disclosure describes signaling techniques that are compatible both with coding standards that only allow one parallel processing mechanism to be implemented at a time, but that are also compatible with potential future coding standards that may allow for more than one parallel processing mechanism to be implemented simultaneously.

The present disclosure improves the signaling of the CTU syntax including the in-loop filtering and the CTU coded block data syntax. The present disclosure takes the benefit of dissociating the CTU bitstream syntax to discard nonrelevant dependencies.

The present disclosure proposes to interleave at a high level the CTU coded block data parameters and the CTU in-loop filter parameters entropy coding to discard an inherited dependency between the CTU reconstruction and the CTU in-loop-filtering parameters. Then, both these two processes are independent and can be processed in parallel.

Regarding the decoding process, this added level of parallelization enables to decode the picture syntax in parallel (including CTU coded block data parameters and CTU in-loop filtering parameters). It enables a possible earlier start of the CTU reconstruction, reducing the total decoding time of a picture, i.e., reducing the time between the start of the entropy decoding, and the end of the in-loop filtering. By reducing the total decoding time, a decoder may be able to support a real-time decoding for higher resolution, and/or higher bitrate. Regarding the encoding process, the entropy encoding can start earlier, increasing the potential parallelism, enabling the support of higher resolution and higher bitrate in real-time.

The present disclosure provides further abilities to parallelize encoding and decoding processes. Compress CTU, CTU reconstruction, entropy encoding, and entropy decoding could be hot spots, depending on the content characteristics. By allowing further parallelism at the entropy coding and decoding levels, both encoders and decoders would be able to address higher resolution, higher bitrate, higher compression ratio.

The present disclosure relates to a method for signaling in a bitstream CTU coded block data and CTU in-loop filtering parameters of a video sequence comprising video pictures. Each video picture is split into multiple CTUs, each CTU comprising CTU blocks. CTU coded blocks data is obtained for each CTU by encoding blocks of said CTU. Reconstructed CTU blocks associated with a CTU is obtained by decoding CTU coded blocks data associated with said CTU. Reconstructed CTU blocks associated with a CTU are then filtered using CTU in-loop filtering parameters associated with said CTU. In contrary to VVC wherein the CTU in-loop filtering parameters and the coded block data parameters are embedded in a same NAL unit, the method, according to the present disclosure, signals the CTU coded blocks data associated with a CTU and CTU in-loop filtering parameters associated with said CTU in distinct NAL units.

In one exemplary embodiment, the CTU coded blocks data parameters are embedded in a NAL unit and the CTU in-loop filtering parameters are embedded in a NAL unit, called first NAL unit, that is only dedicated to signaling of in-loop filtering parameters. The first NAL unit is of a specific type name called LF_NUT.

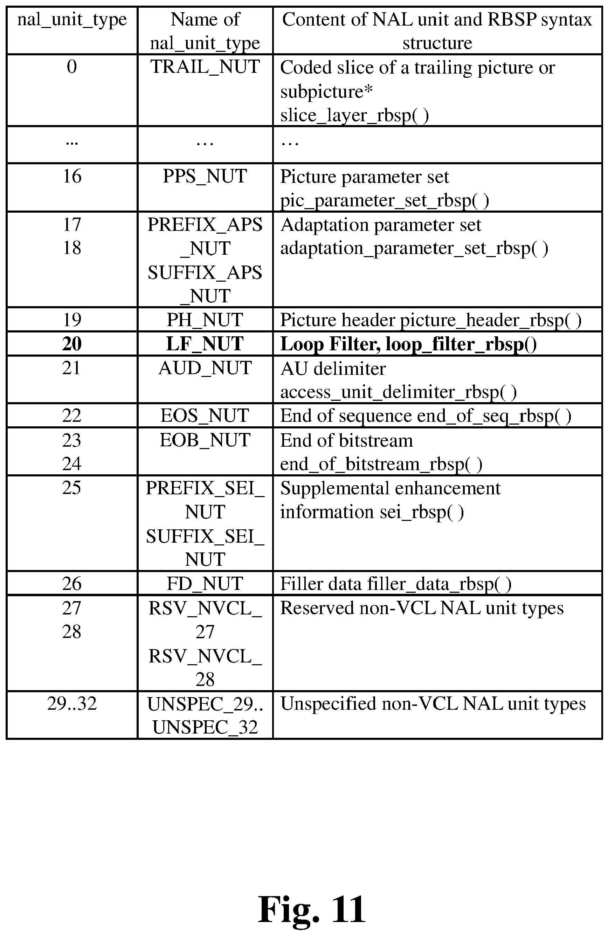

**Figure 11** shows a VVC NAL unit type table modified to include the specific type of NAL unit denotes LF_NUT in accordance with an exemplary embodiment of the present disclosure. Said specific type of NAL unit signals in a bitstream the presence of a NAL unit comprising CTU in-loop filtering parameters.

The VVC CTU syntax is also modified because it contains now only the CTU coded block data parameters as the CTU in-loop filtering parameters are signaled in a first NAL unit.

In the following, bitstream syntax is detailed by providing functions that provide said bitstream syntax. The name of a function is also the name of the syntax element provided by this function.

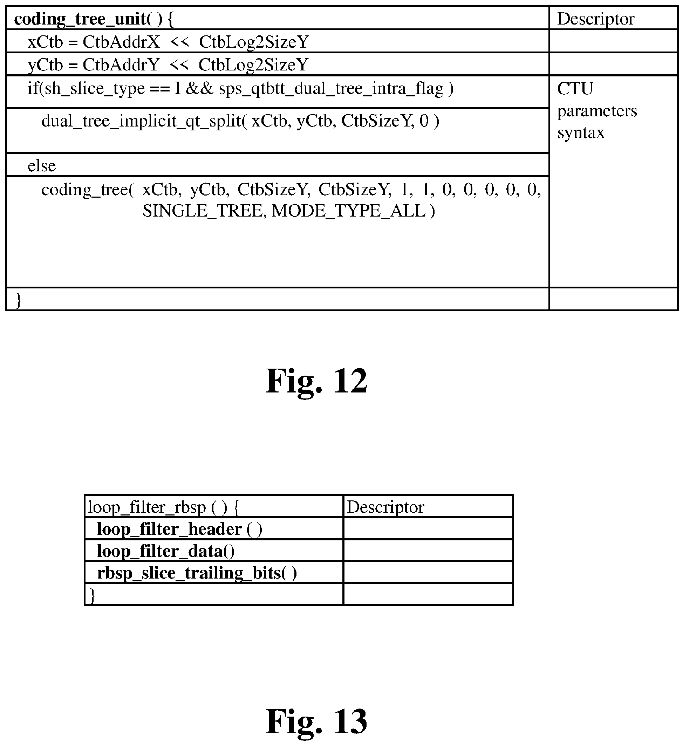

**Figure 12** shows the modified CTU syntax in accordance with an exemplary embodiment of the present disclosure.

**Figure 13** shows a **loop_filter_rbsp()** function in accordance with an exemplary embodiment of the present disclosure.

The **loop_filter_rbsp()** function is a high level function that provides syntax relative to the CTU in-loop filtering parameters. It includes a **loop_filter-header ()** function, a **loop_filter-data()** and a **rbsp_slice_trailing_bits()** function.

The **rbsp_slice_trailing_bits()** aims at signaling the end of the NAL unit syntax and making it byte aligned (i.e., that the next NAL unit will start on a new byte). A second benefit of this kind of syntax is to be able to easily identify a non-compliant bitstream. The RBSP slice trailing bit semantics, the RBSP trailing bit semantics, and the byte alignment semantics defined in sections 7.4.3.15, 7.4.3.16, and 7.4.3.17 of the VVC specification apply.

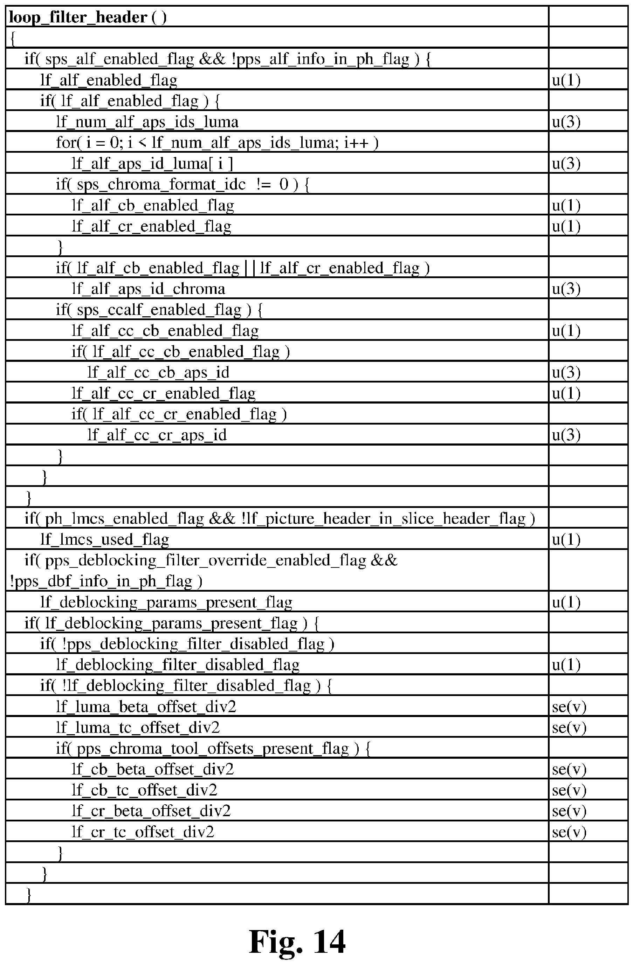

The **Loop_filter_header()** function includes all syntax to identify on which picture to apply the in-loop filtering, and which in-loop filters are used. This structure syntax could include all existing elements in the slice/picture header that are dedicated to the in-loop filtering. An example of syntax elements of the **Loop_filter_header()** function is shown in **Figure 14**.

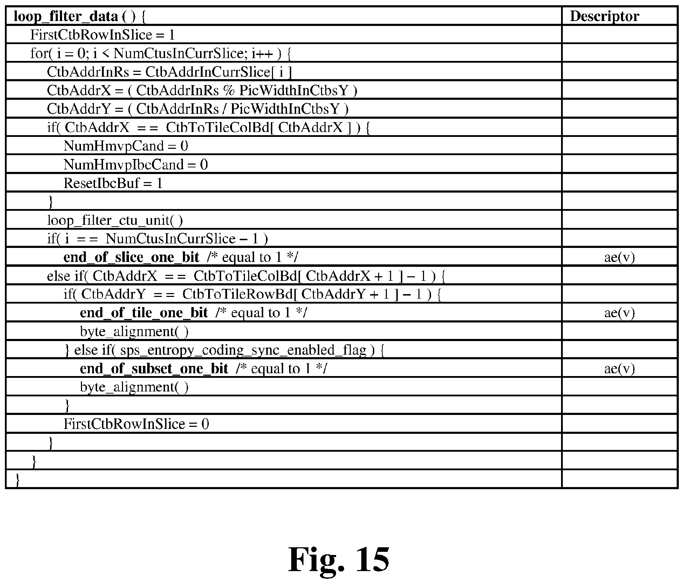

**Figure 15** shows the **Loop_filter_data()** function that signals the loop filter syntax for a given slice/tile in accordance with an exemplary embodiment of the present disclosure.

The **Loop_filter_ctu_unit()** function includes a per Coding Unit (CU) in-loop filtering syntax.

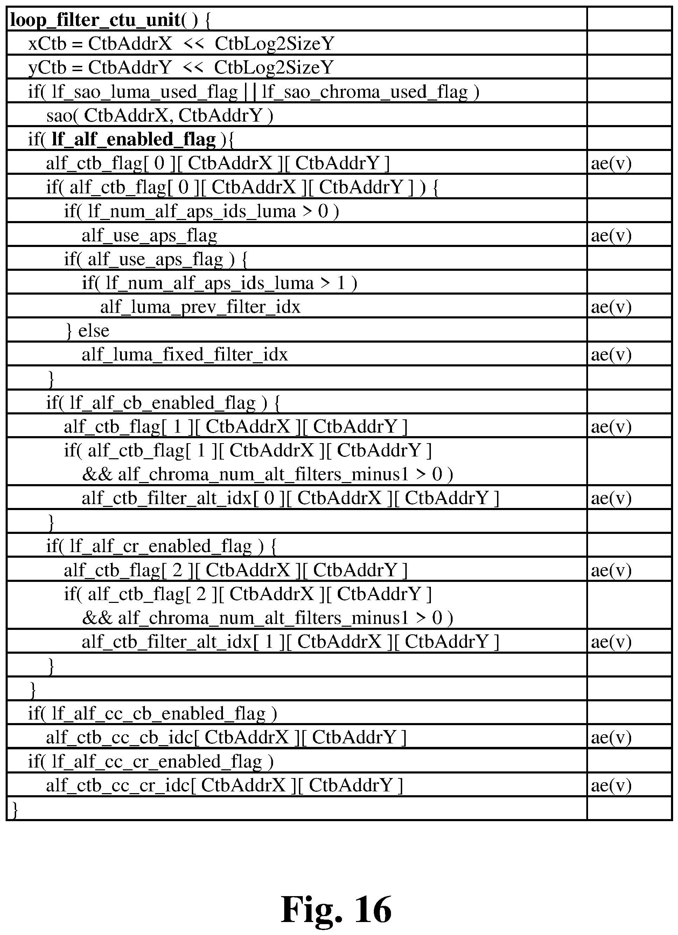

**Figure 16** shows the **Loop_filter_ctu_unit()** in accordance with an exemplary embodiment of the present disclosure.

Considering a first NAL unit requires that all information required by the in-loop filtering can be easily identified and accessible to properly apply it.

In-loop filtering could require information like PH to access general picture information, high-level partitioning in regions of coded elements (e.g., slice, tile), coded block data like motion, quantizer, transform information, etc.

Such information may be retrieved thanks to additional syntax in the **Loop filter header()** function to signal to which PH, SH, SPS, VPS, PPS, APS to refer.

A PU (Picture Unit) contains one coded picture (partitioned or not in multiple slices or tiles) and non-VCL NAL units as explained above.

In one exemplary embodiment, a first NAL unit embedding in-loop filtering parameters intended to be used to apply in-loop filtering on coded blocks data and a VCL NAL unit embedding said coded block data are in a same PU.

This embodiment is advantageous because it does not impose that the first NAL unit should precede or follow the VCL NAL units as far as the required information is available.

In one variant, when a NAL unit reordering is active, a PU containing at least one coded slice NAL unit embedding coded block data of a coded picture and at least one corresponding first NAL unit embedding in-loop filtering parameters intended to be apply on said coded block data, all the first NAL units of the PU are followed by all coded slice NAL units of said PU.

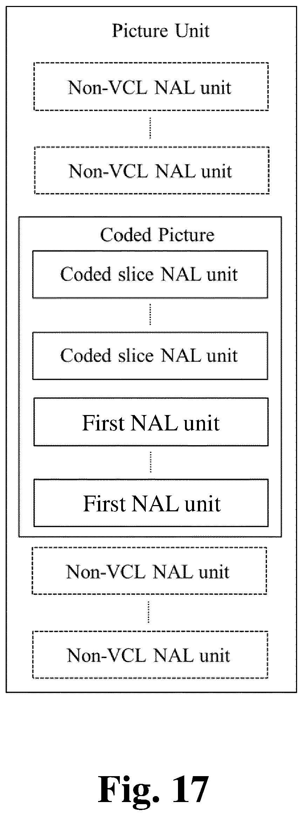

In one variant, as shown in **Figure 17**, when a NAL unit reordering is active, a PU containing at least one coded slice NAL unit embedding coded block data of a coded picture and at least one corresponding first NAL unit embedding in-loop filtering parameters intended to be apply on said coded block data, all coded slice NAL units of the PU are followed by all the first NAL units of said PU.

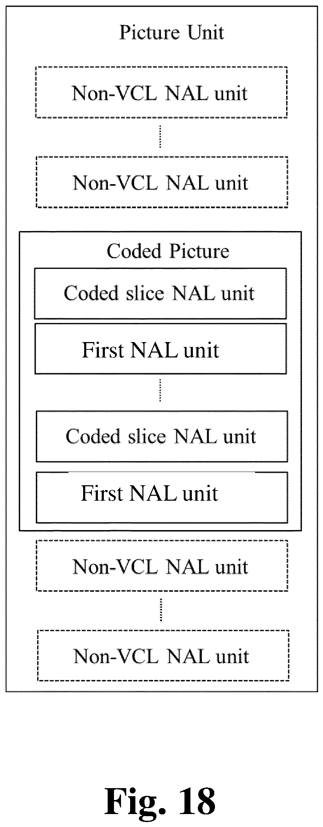

According to the example of **Figure 18**, the PU contains a first coded slice NAL unit enbedding first coded block data and a corresponding first "first" NAL unit embedding in-loop filtering parameters intended to be applied on said first coded block data. The PU further contains a second coded slice NAL unit enbedding second coded block data and a corresponding second "first" NAL unit embedding in-loop filtering parameters intended to be applied on said second coded block data. The first coded slice NAL unit is first signaled, next the first "first" NAL unit, next the second coded slice NAL unit and finally the second "first" NAL unit. The two coded slice NAL units and the two "first" NAL units of the PU are said interleaved.

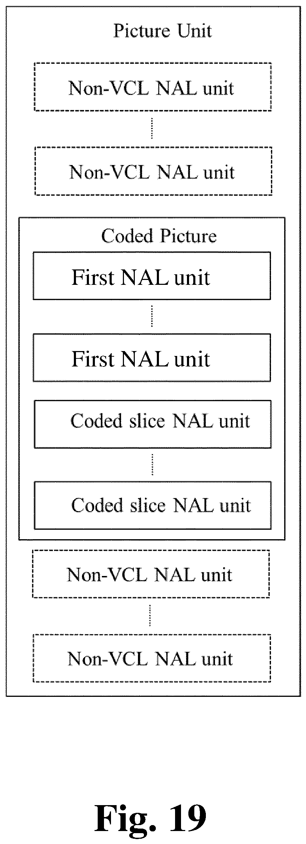

In one variant, as shown in **Figure 19**, when a NAL unit reordering is active, a PU containing at least one coded slice NAL unit embedding coded block data of a coded picture and at least one corresponding first NAL unit embedding in-loop filtering parameters intended to be apply on said coded block data, all the first NAL units of the PU are followed by all the coded slice NAL units of the PU.

In one exemplary embodiment, at least one syntax element is signaled in the bitstream (or parsed from the bitstream) to indicate if NAL unit reordering is active or not.

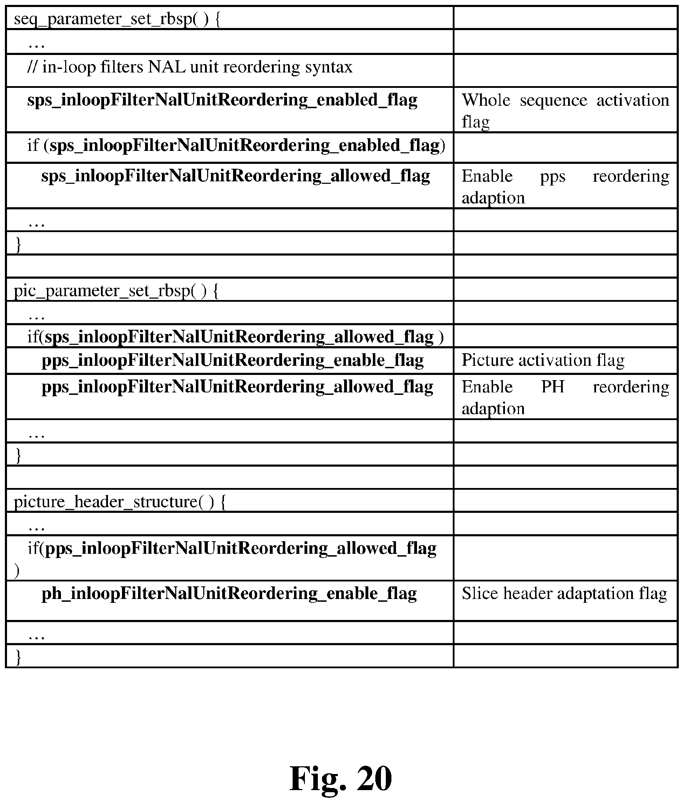

In one variant, illustrated in **Figure 20**, a syntax element **sps_inloopFilterNalUnitReordering_enabled_flag** is added to SPS to signal if the NAL unit reordering is active for the whole video sequence.

In one variant, a syntax element is added to SPS to indicate that another syntax element is present at a different level to indicate whether NAL unit reordering is enabled or not.

In one exemplary embodiment of the last variant, as shown in **Figure 20**, when the syntax element

**sps_inloopFilterNalUnitReordering_enabled_fl ag** indicates that the NAL unit reordering is active for a whole video sequence, a syntax element

**sps_inloopFilterNalUnitReordering_allowed_fla g** is added to SPS to indicate that another syntax element

**pps_inloopFilterNalUnitReordering_enable_fla g** is present in PPS to indicate whether NAL unit reordering is allowed (present) for the pictures referring to this PPS.

In one variant, a syntax element is added to PPS to indicate that another syntax element is present at a different level to indicate whether NAL unit reordering is enabled or not.

Using PPS with different syntax elements to signal NAL unit reordering activation helps reduce the amount of signaled data.

In one exemplary embodiment of the last variant, as shown in **Figure 20**, when the syntax element **pps_inloopFilterNalUnitReordering_allowed_flag** indicates that the NAL unit reordering is active for the pictures referring to this PPS, a syntax element **ph_inloopFilterNalUnitReordering_enable_flag** is present in PH to indicate at slice header level whether NAL unit reordering is allowed (present) for the pictures referring to this PH.

In one variant, a first NAL unit is dedicated to a specific in-loop filtering (SAO, LMCS, DBF, ALF and CC-ALF).

As an example, a first NAL unit can be dedicated to SAO filter, and another first NAL unit can be dedicated to ALF.

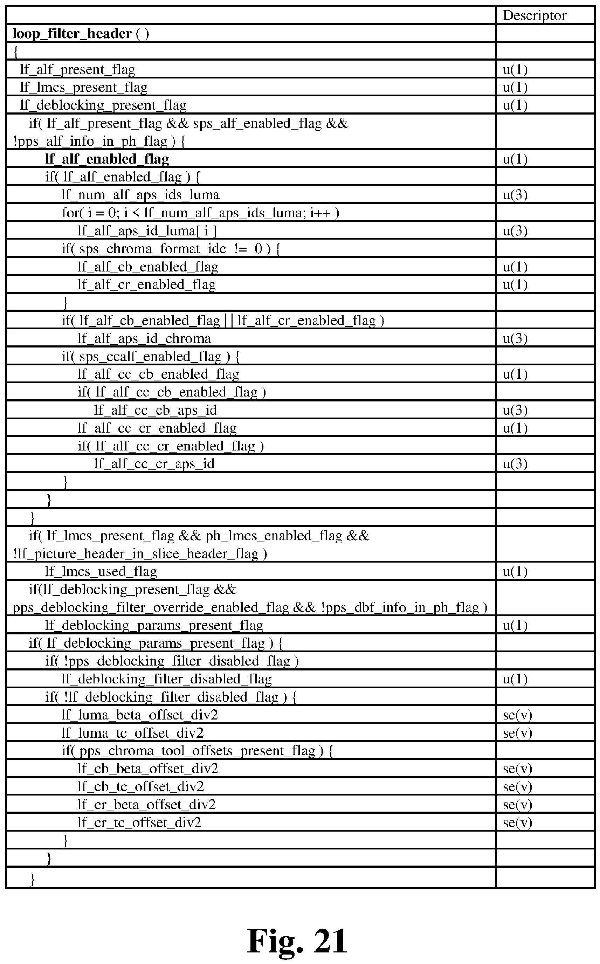

In one exemplary embodiment of the last variant, syntax elements are added in the **Loop_filter_ctu_unit()** (**Figure 16**) and to **Loop filter header()** (**Figure 21**) functions to indicate whether the NAL unit reordering is active or not for each specific in-loop filtering.

If one of said syntax elements indicates that NAL unit reordering is not active, the parsing of syntax elements corresponding to said syntax element is bypassed.

In one exemplary embodiment, a syntax element **lf_alf_enabled_flag** is added to the **Loop_filter_ctu_unit()** and to **Loop filter header()** function and to indicate whether NAL unit reordering is enabled or not for SAO filtering.

In one exemplary embodiment, a syntax element **lf_lmcs_enabled_flag** is added to the **Loop_filter_ctu_unit()** and to **Loop filter header()** function and to indicate whether NAL unit reordering is enabled or not for LMCS filtering.

In one exemplary embodiment, a syntax element **lf_deblocking_enabled_flag** is added to the **Loop_filter_ctu_unit()** and to **Loop filter header()** function and to indicate whether NAL unit reordering is enabled or not for DBF filtering.

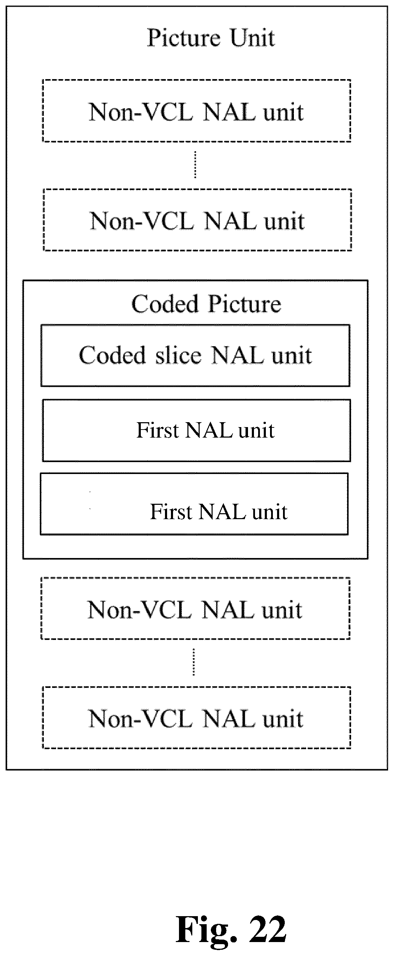

**Figures 22** shows mono-slice PU in accordance with exemplary embodiments of the present disclosure.

In this exemplary embodiment, the PU structure comprises two "first" NAL units to signal to in-loop the parameters of two distinct loop filters.

As explained above, an in-loop filter structure consists of a loop filter header (**Figure 14**) and loop filter data (**Figures 15 and 16**) that both should be present for each PU.

In one variant, the loop filter header and the loop filter data are signaled independently.

In one exemplary embodiment, the loop filter header and the loop filter data are embedded in a same first NAL unit.

In one exemplary embodiment, the loop filter header is embedded in a NAL unit (not a first NAL unit ) and the loop filter data is embedded in a first NAL unit.

Some restrictions can be applied to simplify the design of the signaling method.

In one exemplary embodiment, the loop filter structure (loop filter header and loop filter data) can only be included in a coded slice NAL unit) if the entire PU contains only one slice.

In one exemplary embodiment, within a CLVS, a loop filter structure can only be all in either first NAL units or coded slice NAL units. When the loop filter structure are in the coded slice NAL units, there is no first NAL unit in the CLVS.

The method 100 of encoding in a bitstream a video picture VP of a video sequence (**Figure 5**) defines CTU coded blocks data and CTU in-loop filtering parameters. CTU coded blocks data associated with a CTU and CTU in-loop filtering parameters associated with said CTU are signaled according to the signaling method describes in relation to **Figures 11 to 22**.

The method 200 of decoding from a bitstream a video picture VP of a video sequence (**Figure 6**) obtains CTU coded blocks data and CTU in-loop filtering parameters by parsing said bitstream. CTU coded blocks data associated with a CTU and CTU in-loop filtering parameters associated with said CTU are signaled according to the signaling method describes in relation to **Figures 11 to 22**.

A video processing method may also comprise a step of encoding video pictures according to method 100 in which CTU coded blocks data associated with a CTU and CTU in-loop filtering parameters associated with said CTU are signaled according to the signaling method describes in relation to **Figures 11 to 22**.

A video processing method may also comprise a step of decoding video pictures according to method 200 in which CTU coded blocks data associated with a CTU and CTU in-loop filtering parameters associated with said CTU are parsed from a bitstream obtained according to the signaling method describes in relation to **Figures 11** to **22**.

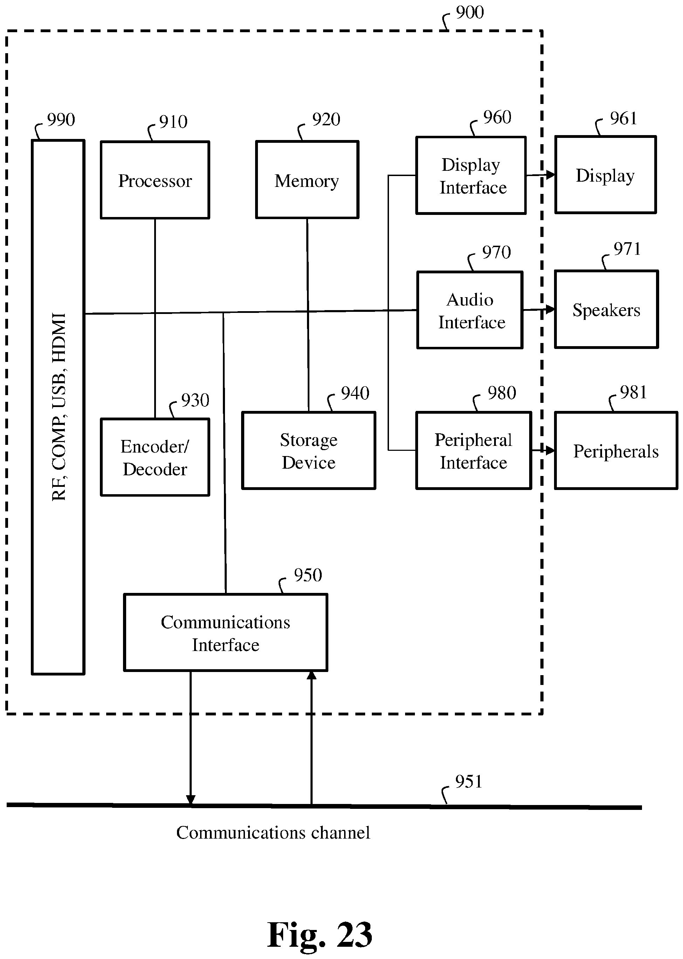

**Figure 23** shows a schematic block diagram illustrating an example of a system 900 in which various aspects and exemplary embodiments are implemented.

System 900 may be embedded as one or more devices including the various components described below. In various exemplary embodiments, system 900 may be configured to implement one or more of the aspects described in the present disclosure.

Examples of equipment that may form all or part of the system 900 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 900, singly or in combination, may be embodied in a single integrated circuit (IC), multiple ICs, and/or discrete components. For example, in at least one exemplary embodiment, the processing and encoder/decoder elements of system 900 may be distributed across multiple ICs and/or discrete components. In various exemplary embodiments, system 900 may be communicatively coupled to other similar systems, or to other electronic devices, via, for example, a communications bus or through dedicated input and/or output ports.

System 900 may include at least one processor 910 configured to execute instructions loaded therein for implementing, for example, the various aspects described in the present disclosure. Processor 910 may include embedded memory, input output interface, and various other circuitries as known in the art. System 900 may include at least one memory 920 (for example a volatile memory device and/or a non-volatile memory device). System 900 may include a storage device 940, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 940 may include an internal storage device, an attached storage device, and/or a network accessible storage device, as non-limiting examples.

System 900 may include an encoder/decoder module 930 configured, for example, to process data to provide encoded/decoded video picture data, and the encoder/decoder module 930 may include its own processor and memory. The encoder/decoder module 930 may represent module(s) that may be included in a device to perform the encoding and/or decoding functions. As is known, a device may include one or both encoding and decoding modules. Additionally, encoder/decoder module 930 may be implemented as a separate element of system 900 or may be incorporated within processor 910 as a combination of hardware and software as known to those skilled in the art.

Program code to be loaded onto processor 910 or encoder/decoder 930 to perform the various aspects described in the present disclosure may be stored in storage device 940 and subsequently loaded onto memory 920 for execution by processor 910. In accordance with various exemplary embodiments, one or more of processor 910, memory 920, storage device 940, and encoder/decoder module 930 may store one or more of various items during the performance of the processes described in the present disclosure. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 910 and/or the encoder/decoder module 930 may be used to store instructions and to provide working memory for processing that may be performed during encoding or decoding.

In other exemplary embodiments, however, a memory external to the processing device (for example, the processing device may be either the processor 910 or the encoder/decoder module 930) may be used for one or more of these functions. The external memory may be the memory 920 and/or the storage device 940, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 900 may be provided through various input devices as indicated in block 990. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present disclosure is implemented in the automotive domain.

In various exemplary embodiments, the input devices of block 990 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 900 to other electronic devices across USB and/or HDMI connections. It is to be understood that various aspects of input processing, for example, Reed-Solomon error correction, may be implemented, for example, within a separate input processing IC or within processor 910 as necessary. Similarly, aspects of USB or HDMI interface processing may be implemented within separate interface ICs or within processor 910 as necessary. The demodulated, error corrected, and demultiplexed stream may be provided to various processing elements, including, for example, processor 910, and encoder/decoder 930 operating in combination with the memory and storage elements to process the data stream as necessary for presentation on an output device.

Various elements of system 900 may be provided within an integrated housing. Within the integrated housing, the various elements may be interconnected and transmit data therebetween using suitable connection arrangement 990, for example, an internal bus as known in the art, including the 12C bus, wiring, and printed circuit boards.

The system 900 may include communication interface 950 that enables communication with other devices via communication channel 951. The communication interface 950 may include, but is not limited to, a transceiver configured to transmit and to receive data over communication channel 951. The communication interface 950 may include, but is not limited to, a modem or network card and the communication channel 951 may be implemented, for example, within a wired and/or a wireless medium.

Data may be streamed to system 900, in various exemplary embodiments, using a Wi-Fi network such as IEEE 802.11. The Wi-Fi signal of these exemplary embodiments may be received over the communications channel 951 and the communications interface 950 which are adapted for Wi-Fi communications. The communications channel 951 of these exemplary embodiments may be typically connected to an access point or router that provides access to outside networks including the Internet for allowing streaming applications and other over-the-top communications.

Other exemplary embodiments may provide streamed data to the system 900 using a set-top box that delivers the data over the HDMI connection of the input block 990.

Still other exemplary embodiments may provide streamed data to the system 900 using the RF connection of the input block 990.

The streamed data may be used as a way for signaling information used by the system 900. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 900 may provide an output signal to various output devices, including a display 961, speakers 971, and other peripheral devices 981. The other peripheral devices 981 may include, in various examples of exemplary embodiments, one or more of a stand-alone DVR, a disk player, a stereo system, a lighting system, and other devices that provide a function based on the output of system 900.

In various exemplary embodiments, control signals may be communicated between the system 900 and the display 961, speakers 971, or other peripheral devices 981 using signaling such as AV.Link (Audio/Video Link), CEC (Consumer Electronics Control), or other communications protocols that enable device-to-device control with or without user intervention.

The output devices may be communicatively coupled to system 900 via dedicated connections through respective interfaces 960, 970, and 980.

Alternatively, the output devices may be connected to system 900 using the communications channel 951 via the communications interface 950. The display 961 and speakers 971 may be integrated in a single unit with the other components of system 900 in an electronic device such as, for example, a television.

In various exemplary embodiments, the display interface 960 may include a display driver, such as, for example, a timing controller (T Con) chip.

The display 961 and speaker 971 may alternatively be separate from one or more of the other components, for example, if the RF portion of input 990 is part of a separate set-top box. In various exemplary embodiments in which the display 961 and speakers 971 may be external components, the output signal may be provided via dedicated output connections, including, for example, HDMI ports, USB ports, or COMP outputs.

In **Figures 1-23**, various methods are described herein, and each of the methods includes one or more steps or actions for achieving the described method. Unless a specific order of steps or actions is required for proper operation of the method, the order and/or use of specific steps and/or actions may be modified or combined.

Some examples are described regarding block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 910 or by hardware, or by a combination of hardware and software. As a non-limiting example, the exemplary embodiments may be also implemented by one or more integrated circuits. The memory 920 may be of any type appropriate to the technical environment and may be implemented using any appropriate data storage technology, such as optical memory devices, magnetic memory devices, semiconductor-based memory devices, fixed memory, and removable memory, as non-limiting examples. The processor 910 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present disclosure. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present disclosure. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present disclosure are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present disclosure are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this disclosure, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present disclosure, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present disclosure may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this disclosure.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present disclosure may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this disclosure may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as CTU coded blocks data, CTU in-loop filtering parameters or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

Also, as used herein, the word "parsing" refers to, among other things, indicating something in a bitstream to a corresponding decoder. For example, in certain exemplary embodiments the decoder parses a particular information such as CTU coded blocks data, CTU in-loop filtering parameters or encoded video picture data. In this way, in an exemplary embodiment the same parameter may be used at both the encoder side and the decoder side. It is to be appreciated that parsing may be accomplished in a variety of ways. For example, one or more syntax elements, flags, and so forth are used to signal information to a corresponding decoder in various exemplary embodiments.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure.

## Claims

1. A method of encoding video pictures to bitstream wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; and wherein the method comprises signaling, in the bitstream, CTU coded blocks data of a CTU and CTU in-loop filtering parameters of said CTU in distinct Network Abstract Layer units, called NAL units.

2. A method of decoding video pictures from bitstream wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; and wherein the method comprises parsing, from the bitstream, CTU coded blocks data of a CTU and CTU in-loop filtering parameters of said CTU from distinct Network Abstract Layer units, called NAL units.

3. The method of claim 1 or 2, wherein the CTU in-loop filtering parameters of a CTU are embedded in a unit of said NAL units, called first NAL unit, that is only dedicated to in-loop filtering parameters signaling.

4. The method of claim 3, wherein a first NAL unit embedding in-loop filtering parameters intended to be used to apply in-loop filtering on coded blocks data and another NAL unit embedding said coded block data are in a same picture unit.

5. The method of claim 4, wherein when a NAL unit reordering is active, a picture unit containing at least one coded slice NAL unit embedding coded block data of a coded picture and at least one corresponding first NAL unit embedding in-loop filtering parameters intended to be apply on said coded block data, all coded slice NAL units of the picture unit are followed by all the first NAL units of the picture unit.

6. The method of claim 4, wherein when a NAL unit reordering is active, a picture unit containing at least one coded slice NAL unit embedding coded block data of a coded picture and at least one corresponding first NAL unit embedding in-loop filtering parameters intended to be apply on said coded block data, all the first NAL units of the picture unit are followed by all coded slice NAL units of the picture unit.

7. The method of claim 4, wherein when a NAL unit reordering is active, a picture unit containing at least one coded slice NAL unit embedding coded block data of a coded picture and at least one corresponding first NAL unit embedding in-loop filtering parameters intended to be apply on said coded block data, coded slice NAL units of the picture unit embedding coded block data and corresponding first NAL units of the picture unit embedding in-loop filtering parameters intended to be apply on said coded block data are interleaved.

8. The method of one of claims 5 to 7, wherein at least one syntax element is signaled in the bitstream or parsed from the bitstream to indicate if NAL unit reordering is active or not.

9. The method of claim 8, wherein said at least one syntax element is signaled in the bitstream or parsed from the bitstream at the sequence and/or picture and/or picture header and/or slice header level.

10. The method of one of claims 1 to 9, wherein a first NAL unit is dedicated to a specific in-loop filtering.

11. A video pictures encoder wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; and wherein the encoder comprises means for signaling in a bitstream CTU coded blocks data of a CTU and CTU in-loop filtering parameters of said CTU in distinct Network Abstract Layer units, called NAL units.

12. A video pictures decoder wherein each video picture being split into multiple coding tree units, denoted CTU, each CTU comprising CTU blocks, CTU coded blocks data being obtained for each CTU; reconstructed CTU blocks being obtained for each CTU and being filtered using in-loop filtering parameters, denoted CTU in-loop filtering parameters; and wherein the method comprises parsing from a bitstream CTU coded blocks data of a CTU and CTU in-loop filtering parameters of said CTU from distinct Network Abstract Layer units, called NAL units.

13. A bitstream, formatted to include CTU coded blocks data and CTU in-loop filtering parameters according to the method of claim 1.

14. A system comprising means for performing one of the methods claimed in any one of claims 1 to 9.

15. A computer program product including instructions which, when the program is executed by one or more processors, causes the one or more processors to carry out a method claimed in any one of claims 1 to 9.

**Fig. 1**

**Fig. 2**

**Fig. 3**

SBTV SBTH STTV STTH

**Fig. 4**

**Fig. 5**

**Fig. 6**

710

720

730

740

# Fig. 7

810

820

830

840

# Fig. 8

| Access Unit | Access Unit | Access Unit |
|---|---|---|

Layer — Picture Unit | Picture Unit | Picture Unit

Layer — Picture Unit | Picture Unit | Picture Unit

Layer — Picture Unit | Picture Unit | Picture Unit

# Fig. 9

Picture unit

Non-VCL NAL unit

Non-VCL NAL unit

Coded picture

Coded slice NAL unit

Coded slice NAL unit

Non-VCL NAL unit

Non-VCL NAL unit

# Fig. 10

| nal_unit_type | Name of nal_unit_type | Content of NAL unit and RBSP syntax structure |
|---|---|---|
| 0 | TRAIL_NUT | Coded slice of a trailing picture or subpicture* slice_layer_rbsp( ) |
| ... | … | … |
| 16 | PPS_NUT | Picture parameter set pic_parameter_set_rbsp( ) |
| 17 18 | PREFIX_APS _NUT SUFFIX_APS _NUT | Adaptation parameter set adaptation_parameter_set_rbsp( ) |
| 19 | PH_NUT | Picture header picture_header_rbsp( ) |
| **20** | **LF_NUT** | **Loop Filter, loop_filter_rbsp()** |
| 21 | AUD_NUT | AU delimiter access_unit_delimiter_rbsp( ) |
| 22 | EOS_NUT | End of sequence end_of_seq_rbsp( ) |
| 23 24 | EOB_NUT | End of bitstream end_of_bitstream_rbsp( ) |
| 25 | PREFIX_SEI_ NUT SUFFIX_SEI_ NUT | Supplemental enhancement information sei_rbsp( ) |
| 26 | FD_NUT | Filler data filler_data_rbsp( ) |
| 27 28 | RSV_NVCL_ 27 RSV_NVCL_ 28 | Reserved non-VCL NAL unit types |
| 29..32 | UNSPEC_29.. UNSPEC_32 | Unspecified non-VCL NAL unit types |

# Fig. 11

| coding_tree_unit( ) { | Descriptor |
|---|---|
| xCtb = CtbAddrX  <<  CtbLog2SizeY | |
| yCtb = CtbAddrY  <<  CtbLog2SizeY | |
| if(sh_slice_type == I && sps_qtbtt_dual_tree_intra_flag ) | CTU parameters syntax |
|    dual_tree_implicit_qt_split( xCtb, yCtb, CtbSizeY, 0 ) | |
| else | |
|    coding_tree( xCtb, yCtb, CtbSizeY, CtbSizeY, 1, 1, 0, 0, 0, 0, 0, SINGLE_TREE, MODE_TYPE_ALL ) | |
| } | |

# Fig. 12

| loop_filter_rbsp ( ) { | Descriptor |
|---|---|
| **loop_filter_header** ( ) | |
| **loop_filter_data**() | |
| **rbsp_slice_trailing_bits**( ) | |
| } | |

# Fig. 13

| loop_filter_header ( ) | |
|---|---|
| { | |
|   if( sps_alf_enabled_flag && !pps_alf_info_in_ph_flag ) { | |
|     lf_alf_enabled_flag | u(1) |
|     if( lf_alf_enabled_flag ) { | |
|       lf_num_alf_aps_ids_luma | u(3) |
|       for( i = 0; i < lf_num_alf_aps_ids_luma; i++ ) | |
|         lf_alf_aps_id_luma[ i ] | u(3) |
|       if( sps_chroma_format_idc != 0 ) { | |
|         lf_alf_cb_enabled_flag | u(1) |
|         lf_alf_cr_enabled_flag | u(1) |
|       } | |
|       if( lf_alf_cb_enabled_flag \|\| lf_alf_cr_enabled_flag ) | |
|         lf_alf_aps_id_chroma | u(3) |
|       if( sps_ccalf_enabled_flag ) { | |
|         lf_alf_cc_cb_enabled_flag | u(1) |
|         if( lf_alf_cc_cb_enabled_flag ) | |
|           lf_alf_cc_cb_aps_id | u(3) |
|         lf_alf_cc_cr_enabled_flag | u(1) |
|         if( lf_alf_cc_cr_enabled_flag ) | |
|           lf_alf_cc_cr_aps_id | u(3) |
|       } | |
|     } | |
|   } | |
|   if( ph_lmcs_enabled_flag && !lf_picture_header_in_slice_header_flag ) | |
|     lf_lmcs_used_flag | u(1) |
|   if( pps_deblocking_filter_override_enabled_flag && !pps_dbf_info_in_ph_flag ) | |
|     lf_deblocking_params_present_flag | u(1) |
|   if( lf_deblocking_params_present_flag ) { | |
|     if( !pps_deblocking_filter_disabled_flag ) | |
|       lf_deblocking_filter_disabled_flag | u(1) |
|     if( !lf_deblocking_filter_disabled_flag ) { | |
|       lf_luma_beta_offset_div2 | se(v) |
|       lf_luma_tc_offset_div2 | se(v) |
|       if( pps_chroma_tool_offsets_present_flag ) { | |
|         lf_cb_beta_offset_div2 | se(v) |
|         lf_cb_tc_offset_div2 | se(v) |
|         lf_cr_beta_offset_div2 | se(v) |
|         lf_cr_tc_offset_div2 | se(v) |
|       } | |
|     } | |
|   } | |

# Fig. 14

| loop_filter_data ( ) { | Descriptor |
|---|---|
| FirstCtbRowInSlice = 1 | |
| for( i = 0; i < NumCtusInCurrSlice; i++ ) { | |
| CtbAddrInRs = CtbAddrInCurrSlice[ i ] | |
| CtbAddrX = ( CtbAddrInRs % PicWidthInCtbsY ) | |
| CtbAddrY = ( CtbAddrInRs / PicWidthInCtbsY ) | |
| if( CtbAddrX = = CtbToTileColBd[ CtbAddrX ] ) { | |
| NumHmvpCand = 0 | |
| NumHmvpIbcCand = 0 | |
| ResetIbcBuf = 1 | |
| } | |
| loop_filter_ctu_unit( ) | |
| if( i = = NumCtusInCurrSlice − 1 ) | |
| **end_of_slice_one_bit** /* equal to 1 */ | ae(v) |
| else if( CtbAddrX = = CtbToTileColBd[ CtbAddrX + 1 ] − 1 ) { | |
| if( CtbAddrY = = CtbToTileRowBd[ CtbAddrY + 1 ] − 1 ) { | |
| **end_of_tile_one_bit** /* equal to 1 */ | ae(v) |
| byte_alignment( ) | |
| } else if( sps_entropy_coding_sync_enabled_flag ) { | |
| **end_of_subset_one_bit** /* equal to 1 */ | ae(v) |
| byte_alignment( ) | |
| } | |
| FirstCtbRowInSlice = 0 | |
| } | |
| } | |
| } | |

# Fig. 15

| | |
|---|---|
| **loop_filter_ctu_unit**( ) { | |
| xCtb = CtbAddrX << CtbLog2SizeY | |
| yCtb = CtbAddrY << CtbLog2SizeY | |
| if( lf_sao_luma_used_flag \|\| lf_sao_chroma_used_flag ) | |
| sao( CtbAddrX, CtbAddrY ) | |
| if( **lf_alf_enabled_flag** ){ | |
| alf_ctb_flag[ 0 ][ CtbAddrX ][ CtbAddrY ] | ae(v) |
| if( alf_ctb_flag[ 0 ][ CtbAddrX ][ CtbAddrY ] ) { | |
| if( lf_num_alf_aps_ids_luma > 0 ) | |
| alf_use_aps_flag | ae(v) |
| if( alf_use_aps_flag ) { | |
| if( lf_num_alf_aps_ids_luma > 1 ) | |
| alf_luma_prev_filter_idx | ae(v) |
| } else | |
| alf_luma_fixed_filter_idx | ae(v) |
| } | |
| if( lf_alf_cb_enabled_flag ) { | |
| alf_ctb_flag[ 1 ][ CtbAddrX ][ CtbAddrY ] | ae(v) |
| if( alf_ctb_flag[ 1 ][ CtbAddrX ][ CtbAddrY ]<br>&& alf_chroma_num_alt_filters_minus1 > 0 ) | |
| alf_ctb_filter_alt_idx[ 0 ][ CtbAddrX ][ CtbAddrY ] | ae(v) |
| } | |
| if( lf_alf_cr_enabled_flag ) { | |
| alf_ctb_flag[ 2 ][ CtbAddrX ][ CtbAddrY ] | ae(v) |
| if( alf_ctb_flag[ 2 ][ CtbAddrX ][ CtbAddrY ]<br>&& alf_chroma_num_alt_filters_minus1 > 0 ) | |
| alf_ctb_filter_alt_idx[ 1 ][ CtbAddrX ][ CtbAddrY ] | ae(v) |
| } | |
| } | |
| if( lf_alf_cc_cb_enabled_flag ) | |
| alf_ctb_cc_cb_idc[ CtbAddrX ][ CtbAddrY ] | ae(v) |
| if( lf_alf_cc_cr_enabled_flag ) | |
| alf_ctb_cc_cr_idc[ CtbAddrX ][ CtbAddrY ] | ae(v) |
| } | |

# Fig. 16

Picture Unit

Non-VCL NAL unit

Non-VCL NAL unit

Coded Picture

Coded slice NAL unit

Coded slice NAL unit

First NAL unit

First NAL unit

Non-VCL NAL unit

Non-VCL NAL unit

# Fig. 17

**Fig. 18**

**Fig. 19**

| | |
|---|---|
| seq_parameter_set_rbsp( ) { | |
| ... | |
| // in-loop filters NAL unit reordering syntax | |
| **sps_inloopFilterNalUnitReordering_enabled_flag** | Whole sequence activation flag |
| if (**sps_inloopFilterNalUnitReordering_enabled_flag**) | |
| **sps_inloopFilterNalUnitReordering_allowed_flag** | Enable pps reordering adaption |
| ... | |
| } | |
| | |
| pic_parameter_set_rbsp( ) { | |
| ... | |
| if(**sps_inloopFilterNalUnitReordering_allowed_flag** ) | |
| **pps_inloopFilterNalUnitReordering_enable_flag** | Picture activation flag |
| **pps_inloopFilterNalUnitReordering_allowed_flag** | Enable PH reordering adaption |
| ... | |
| } | |
| | |
| picture_header_structure( ) { | |
| ... | |
| if(**pps_inloopFilterNalUnitReordering_allowed_flag** ) | |
| **ph_inloopFilterNalUnitReordering_enable_flag** | Slice header adaptation flag |
| ... | |
| } | |

# Fig. 20

| | Descriptor |
|---|---|
| **loop_filter_header** ( ) | |
| { | |
| lf_alf_present_flag | u(1) |
| lf_lmcs_present_flag | u(1) |
| lf_deblocking_present_flag | u(1) |
| if( lf_alf_present_flag && sps_alf_enabled_flag && !pps_alf_info_in_ph_flag ) { | |
| **lf_alf_enabled_flag** | u(1) |
| if( lf_alf_enabled_flag ) { | |
| lf_num_alf_aps_ids_luma | u(3) |
| for( i = 0; i < lf_num_alf_aps_ids_luma; i++ ) | |
| lf_alf_aps_id_luma[ i ] | u(3) |
| if( sps_chroma_format_idc != 0 ) { | |
| lf_alf_cb_enabled_flag | u(1) |
| lf_alf_cr_enabled_flag | u(1) |
| } | |
| if( lf_alf_cb_enabled_flag \|\| lf_alf_cr_enabled_flag ) | |
| lf_alf_aps_id_chroma | u(3) |
| if( sps_ccalf_enabled_flag ) { | |
| lf_alf_cc_cb_enabled_flag | u(1) |
| if( lf_alf_cc_cb_enabled_flag ) | |
| lf_alf_cc_cb_aps_id | u(3) |
| lf_alf_cc_cr_enabled_flag | u(1) |
| if( lf_alf_cc_cr_enabled_flag ) | |
| lf_alf_cc_cr_aps_id | u(3) |
| } | |
| } | |
| } | |
| if( lf_lmcs_present_flag && ph_lmcs_enabled_flag && !lf_picture_header_in_slice_header_flag ) | |
| lf_lmcs_used_flag | u(1) |
| if(lf_deblocking_present_flag && pps_deblocking_filter_override_enabled_flag && !pps_dbf_info_in_ph_flag ) | |
| lf_deblocking_params_present_flag | u(1) |
| if( lf_deblocking_params_present_flag ) { | |
| if( !pps_deblocking_filter_disabled_flag ) | |
| lf_deblocking_filter_disabled_flag | u(1) |
| if( !lf_deblocking_filter_disabled_flag ) { | |
| lf_luma_beta_offset_div2 | se(v) |
| lf_luma_tc_offset_div2 | se(v) |
| if( pps_chroma_tool_offsets_present_flag ) { | |
| lf_cb_beta_offset_div2 | se(v) |
| lf_cb_tc_offset_div2 | se(v) |
| lf_cr_beta_offset_div2 | se(v) |
| lf_cr_tc_offset_div2 | se(v) |
| } | |
| } | |
| } | |

# Fig. 21

Picture Unit

Non-VCL NAL unit

Non-VCL NAL unit

Coded Picture

Coded slice NAL unit

First NAL unit

First NAL unit

Non-VCL NAL unit

Non-VCL NAL unit

# Fig. 22

900

990

910 Processor

920 Memory

960 Display Interface

961 Display

RF, COMP, USB, HDMI

970 Audio Interface

971 Speakers

930 Encoder/ Decoder

940 Storage Device

980 Peripheral Interface

981 Peripherals

950 Communications Interface

951

Communications channel

**Fig. 23**

Europäisches
Patentamt

European
Patent Office

Office européen
des brevets

# EUROPEAN SEARCH REPORT

**Application Number**

EP 23 30 5907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/121486 A1 (OUEDRAOGO NAËL [FR] ET AL) 20 April 2023 (2023-04-20)<br>* paragraph [0001] – paragraph [0005] *<br>* paragraph [0047] *<br>* paragraph [0144] – paragraph [0147] *<br>* paragraph [0098] *<br>* paragraph [0128] *<br>* paragraph [0185] *<br>* paragraph [0193] – paragraph [0194] *<br>* paragraph [0241] – paragraph [0243] *<br>* paragraph [0262]; figure 12A *<br>* paragraph [0298] *<br>----- | 1-4,7-15 | INV.<br>H04N19/70<br>H04N19/117<br>H04N19/176<br>H04N19/82 |
| X | US 2023/066409 A1 (DENG ZHIPIN [CN] ET AL) 2 March 2023 (2023-03-02)<br>* paragraph [0011] *<br>* Section 3.2 *<br>* column 2, paragraph 32 *<br>* table 6 *<br>* paragraph [0639] – paragraph [0640] *<br>* paragraph [0408] – paragraph [0414] *<br>----- | 1-6,8-15 | |
| A | "Information technology – Coding of audio-visual objects – Part 15: Carriage of network abstraction layer (NAL) unit structured video in the ISO base media file format",<br>ISO/IEC 14496-15:2022, IEC, 3, RUE DE VAREMBÉ, PO BOX 131, CH-1211 GENEVA 20, SWITZERLAND<br>,<br>11 October 2022 (2022-10-11), pages 1-277, XP082038837,<br>Retrieved from the Internet:<br>URL:https://api.iec.ch/harmonized/publicat ions/download/3099537<br>[retrieved on 2022-10-11]<br>* page 194 *<br>----- | 1-15 | TECHNICAL FIELDS SEARCHED (IPC)<br><br>H04N |

The present search report has been drawn up for all claims

| Place of search | Date of completion of the search | Examiner |
|---|---|---|
| The Hague | 27 October 2023 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5907

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2023

| Patent document cited in search report | | Publication date | Patent family member(s) | | Publication date |
|---|---|---|---|---|---|
| US 2023121486 | A1 | 20-04-2023 | BR | 112022016463 A2 | 04-10-2022 |
| | | | CL | 2022002565 A1 | 12-05-2023 |
| | | | CL | 2022003212 A1 | 21-07-2023 |
| | | | CL | 2022003214 A1 | 23-06-2023 |
| | | | CL | 2022003216 A1 | 23-06-2023 |
| | | | CL | 2022003217 A1 | 23-06-2023 |
| | | | CL | 2022003218 A1 | 23-06-2023 |
| | | | CN | 115362684 A | 18-11-2022 |
| | | | EP | 4128785 A1 | 08-02-2023 |
| | | | GB | 2593543 A | 29-09-2021 |
| | | | GB | 2593549 A | 29-09-2021 |
| | | | JP | 2023518925 A | 09-05-2023 |
| | | | KR | 20220160029 A | 05-12-2022 |
| | | | TW | 202137768 A | 01-10-2021 |
| | | | US | 2023121486 A1 | 20-04-2023 |
| | | | WO | 2021191159 A1 | 30-09-2021 |
| US 2023066409 | A1 | 02-03-2023 | CN | 115868159 A | 28-03-2023 |
| | | | US | 2023066409 A1 | 02-03-2023 |
| | | | WO | 2021209061 A1 | 21-10-2021 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Versatile Video Coding. *Rec. ITU-T H.266 | ISO/IEC 23090-3,* 2020